# EUROPÄISCHE PATENTSCHRIFT

(11) **EP 0 915 353 B1**
(45) Veröffentlichungstag und Bekanntmachung des Hinweises auf die Patenterteilung: **10.08.2005**
(21) Anmeldenummer: 98119792.4
(22) Anmeldetag: 22.10.1998
(51) Int. Cl.: G02B 6/28, G02F 1/01

(54) **Anordnung aus optischen Wellenleitern**
Optical waveguide arrangement
Arrangement de guides d'ondes optiques

(30) Priorität: 31.10.1997 DE 19748300
(43) Veröffentlichungstag der Anmeldung: 12.05.1999
(73) Patentinhaber: Infineon Technologies AG, 81669 München (DE)
(72) Erfinder: März, Reinhard, Dr., 81477 München (DE); Dieckröger, Jens, 81673 München (DE)
(74) Vertreter: Müller, Wolfram Hubertus, Dipl.-Phys.

(56) Entgegenhaltungen:
- EP-A- 0 412 675
- EP-A- 0 569 182
- EP-A- 0 662 621
- EP-A- 0 756 184
- US-A- 5 402 514
- BISSESSUR H ET AL: "TUNABLE PHASED-ARRAY WAVELENGTH DEMULTIPLEXER ON INP" ELECTRONICS LETTERS,GB,IEE STEVENAGE, Bd. 31, Nr. 1, Seite 32-33 XP000504151 ISSN: 0013-5194
- JOYNER C H ET AL: "Optical N*N demultiplexer with continuous wavelength tuning by thin film heater" ELECTRONICS LETTERS, 22 MAY 1997, IEE, UK, Bd. 33, Nr. 11, Seiten 933-934, XP002122397 ISSN: 0013-5194
- MOELLER B A ET AL: "SILICA-WAVEGUIDE THERMOOPTIC PHASE SHIFTER WITH LOW POWER CONSUMPTION AND LOW LATERAL HEAT DIFFUSION" IEEE PHOTONICS TECHNOLOGY LETTERS,US,IEEE INC. NEW YORK, Bd. 5, Nr. 12, Seite 1415-1418 XP000432988 ISSN: 1041-1135
- MAXWELL G D ET AL: "DEMONSTRATION OF A DIRECTLY WRITTEN DIRECTIONAL COUPLER USING UV-INDUCED PHOTOSENSITIVTY IN A PLANAR SILICA WAVEGUIDE" ELECTRONICS LETTERS,GB,IEE STEVENAGE, Bd. 31, Nr. 2, 19. Januar 1995 (1995-01-19), Seiten 95-96, XP000504786 ISSN: 0013-5194

## Beschreibung

Die Erfindung betrifft eine Anordnung aus optischen Wellenleitern nach dem Oberbegriff des Anspruchs 1 und wie sie beispielsweise aus der EP-A-0 662 621 (GR 94 P 1013 E) bekannt ist.

Die bei einer derartigen Anordnung maßgebende optische Länge eines Wellenleiters ist durch das Produkt nL aus einer Brechzahl n und geometrischen Länge L des Wellenleiters gegeben.

Die geometrische Länge L des Wellenleiters ist die Länge einer sich zwischen dessen einkoppel- und auskoppelseitigem Ende erstreckenden optischen Achse dieses Wellenleiters, entlang der sich eine optische Welle in diesem Wellenleiter ausbreitet.

Die Brechzahl n des Wellenleiters ist als dessen effektive Brechzahl durch 2π·β·λ gegeben, wobei β die Ausbreitungskonstante der in diesem Wellenleiter entlang der optischen Achs geführten optischen Welle und λ deren Wellenlänge ist.

Sind die Brechzahl n und die geoemtrische Länge L jedes Wellenleiters der Anordnung einmal festgelegt, so ist auch dessen optische Länge nL festgelegt.

Die bekannte Anordnung weist eine Einrichtung auf, mit der trotz festgelegter optischer Länge nL jedes Wellenleiters eine Änderung Δ(nL) der optischen Länge nL der Wellenleiter ermöglicht ist.

Eine solche Einrichtung zur Erzeugung einer Änderung Δ(nL) der optischen Länge nL der Wellenleiter kann so ausgebildet sein, daß sie die Brechzahl n des Wellenleiters und/oder dessen geometrische Länge L verändert.

Beispielsweise kann ein Wellenleiter ein Material einer Brechzahl aufweisen, die durch eine bestimmte physikalische Größe veränderbar ist. Die Änderung Δ(nL) der optischen Länge nL dieses Wellenleiters ist in der Regel umso größer, je größer der Betrag der brechzahlverändernden physikalischen Größe und/oder der Teil der optischen Länge nL des Wellenleiters ist, auf den diese Größe einwirkt und umgekehrt.

In der EP-A-0 662 621 sind dazu als Beispiele der elektrooptische Effekt, bei dem der Wellenleiter elektrooptisches Material aufweist, dessen Brechzahl durch Einwirkenlassen eines elektrischen Feldes auf das Material veränderbar ist, die Ladungsträgerinjektion, bei welcher der Wellenleiter Halbleitermaterialmaterial aufweist, dessen Brechzahl durch eine elektrische Ladungsträgerinjektion in das Material veränderbar ist, und/oder der thermooptische Effekt genannt, bei dem der Wellenleiter thermooptisches Material aufweist, dessen Brechzahl durch Temperaturänderung veränderbar ist.

Die Einrichtung zur Erzeugung einer Änderung Δ(nL) der optischen Länge nL der Wellenleiter weist in diesen Fällen eine Einrichtung zum wahlweisen Erzeugen eines elektrischen Feldes, von Ladungsträgern und/oder einer Temperturänderung auf. Eine Temperaturänderung kann auch eine Änderung der geometrischen Länge L des Wellenleiters erzeugen.

Speziell weisen alle Wellenleiter der bekannten Anordnung eine voneinander verschiedene optische Länge nL derart auf, daß diese Länge nL, ausgehend von einem Wellenleiter kürzester optischer Länge, von Wellenleiter zu Wellenleiter in Richtung zu einem Wellenleiter größter optischer Länge zunimmt.

Die unterschiedliche optische Länge nL der verschiedenen Wellenleiter läßt sich durch eine voneinander verschiedene Brechzahl n und/oder voneinander verschiedene geometrische Länge L der Wellenleiter erhalten.

Weisen die verschiedenen Wellenleiter beispielsweise untereinander die gleiche Brechzahl n auf, läßt sich die unterschiedliche optische Länge nL der verschiedenen Wellenleiter allein durch eine unterschiedliche geometrische Länge L dieser Wellenleiter erhalten.

Überdies es bei der bekannten Anordnung speziell so eingerichtet, daß die ausgangsseitigen Enden der Wellenleiter in einem derart geringen räumlichen Abstand nebeneinander angeordnet sind, daß die aus diesen Enden ausgekoppelten optischen Wellen kohärent einander überlagert sind.

Beim gleichzeitigen Einkoppeln einer optischen Welle, die eine oder mehrere voneinander verschiedene Wellenlängen enthält, in alle Wellenleiter dieser Anordnung durch das eingangsseitige Ende dieser Wellenleiter, wird in jedem dieser Wellenleiter je ein alle diese Wellenlängen enthaltender optischer Leistungsanteil dieser Welle zum ausgangsseitigen Ende dieses Wellenleiters geführt und an diesem Ende ausgekoppelt. Die aus allen ausgangsseitigen Enden ausgekoppelten Leistungsanteile werden kohärent einander überlagert.

Die voneinander verschiedene optische Länge nL der Wellenleiter und die kohärente Überlagerung der ausgekoppelten Leistungsanteile bewirken, daß die auf eine einzelne Wellenlänge entfallenden ausgekoppelten optischen Leistungsanteile in einem dieser Wellenlänge individuell zugeordneten Raumpunkt konzentriert werden, wobei die auf voneinander verschiedene Wellenlängen entfallenden ausgekoppelten optischen Leistungsanteile in räumlich voneinander beabstandeten Raumpunkten konzentriert werden.

Auf diese Weise vermag die bekannte Anordnung bei Verwendung einer großen Zahl optischer Wellenleiter eine große Zahl voneinander verschiedener Wellenlängen voneinander zu trennen, deren jede eine Zentralwellenlänge je eines optischen Wellenlängenkanals sein kann.

Durch die Einrichtung zur Erzeugung einer Änderung der optischen Länge nL der Wellenleiter ist es bei der bekannten Anordnung möglich, den einer einzelnen Wellenlänge individuell zugeordneten Raumpunkt, in welchem die auf diese Wellenlänge entfallenden ausgekoppelten optischen Leistungsanteile konzentriert sind, räumlich zu verschieben, insbesondere so weit, daß dieser Raumpunkt nach dieser Verschiebung die Stelle eines anderen Raumpunktes einnimmt, in welchem vor der Verschiebung die auf eine andere Wellenlänge entfallenden ausgekoppelten optischen Leistungsanteile konzentriert sind, so daß nach der Verschiebung die auf die eine Wellenlänge entfallenden ausgekoppelten optischen Leistungsanteile jetzt an der Stelle des anderen Raumpunktes konzentriert sind.

Die Einrichtung zur Erzeugung einer Änderung Δ(nL) der optischen Länge nL der Wellenleiter ist zweckmäßigerweise so ausgebildet, daß die erzeugte Änderung Δ(nL) der optischen Länge nL ausgehend vom Wellenleiter mit der kürzesten optischen Länge von Wellenleiter zu Wellenleiter in Richtung zum Wellenleiter mit der größten optischen Länge zunimmt.

Beispielsweise weist bei der bekannten Anordnung jeder Wellenleiter thermooptisches Material auf, das durch eine Heizelektrode erwärmt werden kann. Über jedem Wellenleiter ist zumindest je eine Heizelektrode zum Erwärmen des thermooptischen Materials vorhanden, die einen in der einen Richtung von Wellenleiter zu Wellenleiter zunehmenden Teil der optischen Länge nL dieses Wellenleiters erwärmt.

In dieser speziellen Ausführung kann die bekannte Anordnung als ein abstimmbares optisches Gitter oder Filter, das eine große Zahl von Wellenlängenkanälen voneinander zu trennen vermag, und bei fester Wellenlänge als 1 × N-Schalter verwendet werden und ist zu einer WDM-Übertragung, Wellenlängenvermittlung und/oder Wellenlängenkonversion einsetzbar.

Die Verwendung von Heizelektroden unter Ausnutzung des thermooptischen Effekts bedingt bei der bekannten Einrichtung zur Erzeugung einer Änderung Δ(nL) der festgelegten optischen Länge nL der Wellenleiter, daß diese Länge nL bei jedem Wellenleiter nur vergrößert werden kann und dadurch die räumliche Verschiebung des einer einzelnen Wellenlänge individuell zugeordneten Raumpunktes, in welchem die auf diese Wellenlänge entfallenden ausgekoppelten optischen Leistungsanteile konzentriert sind, nur in einer Richtung möglich ist.

Aus der EP 0 412 675 A2 ist ein integriertes optisches Bauelement bekannt, bei dem Wellenleiterbereiche durch Bestrahlung eines photopolymerisierbaren Materials mittels einer Maske ausgebildet werden.

Der Erfindung liegt die Aufgabe zugrunde, eine Anordnung der eingangs genannten Art bereitzustellen, bei der aus den ausgangsseitigen Enden der Wellenleiter ausgekoppelte optische Leistungsanteile phasenmäßig auf zueinander entgegengesetzte Weise gegenüber einem durch die festgelegte optische Länge der Wellenleiter gegebenen phasenmäßigen Zustand dieser Leistungsanteile geändert werden kann.

Diese Aufgabe wird durch eine optische Anordnung mit den Merkmalen des Anspruchs 1 gelöst.

Durch die Erfindung ist eine neuartige, durch eine Belichtung hergestellte optische Anordnung realisiert. Bevorzugte und vorteilhafte Ausgestaltungen dieser Anordnung gehen aus den Ansprüchen 2 und 3 hervor.

Bei der erfindungsgemäßen Anordnung kann eine Änderung des gegebenen phasenmäßigen Zustandes in einer Richtung und unabhängig davon eine Änderung des gegebenen phasenmäßigen Zustandes in einer zur einen Richtung entgegengesetzten Richtung wahlweise vorgenommen werden, insbesondere gleichzeitig oder zeitlich nacheinander. Insbesondere ist es möglich, eine Änderung des gegebenen phasenmäßigen Zustandes in zueinander entgegengesetzten Richtungen durch Änderung der Brechzahl eines photoempfindlichen Materials zu bewirken, das die Wellenleiter aufweisen.

Die Erfindung wird in der nachfolgenden Beschreibung anhand der Figuren beispielhaft näher erläutert. Es zeigen:
- Figur 1: eine Draufsicht auf ein erstes Beispiel einer Anordnung aus optischen Wellenleitern,
- Figur 2: ausschnitthaft einen vertikalen Schnitt durch das Beispiel nach Figur 1 längs der Schnittlinie I-I, und
- Figur 3: eine Draufsicht auf ein zweites Beispiel einer Anordnung aus optischen Wellenleitern,
- Figur 4a: von Elektroden zu bedeckende Bereiche des Beispiels nach Figur 1 bei gekrümmt verlaufenden Wellenleitern qualitativ in Draufsicht, und
- Figur 4b: von Elektroden zu bedeckende Bereiche des Beispiels nach Figur 3 bei gekrümmt verlaufenden Wellenleitern qualitativ in Draufsicht,
- Figur 5: eine Draufsicht auf eine optische Anordnung mit von optischen Wellenleitern, die mit einer Belichtungsmaske teilweise abgedeckt sind,
- Figur 6: die optische Anordnung nach Figur 5 in der gleichen Darstellung, wobei die Wellenleiter mit einer anderen Belichtungsmaske teilweise abgedeckt sind, und
- Figur 7: ausschnitthaft einen vertikalen Schnitt durch die optische Anordnung nach Figur 6 längs der Schnittlinie II-II.

Die Figuren sind schematisch und nicht maßstäblich.

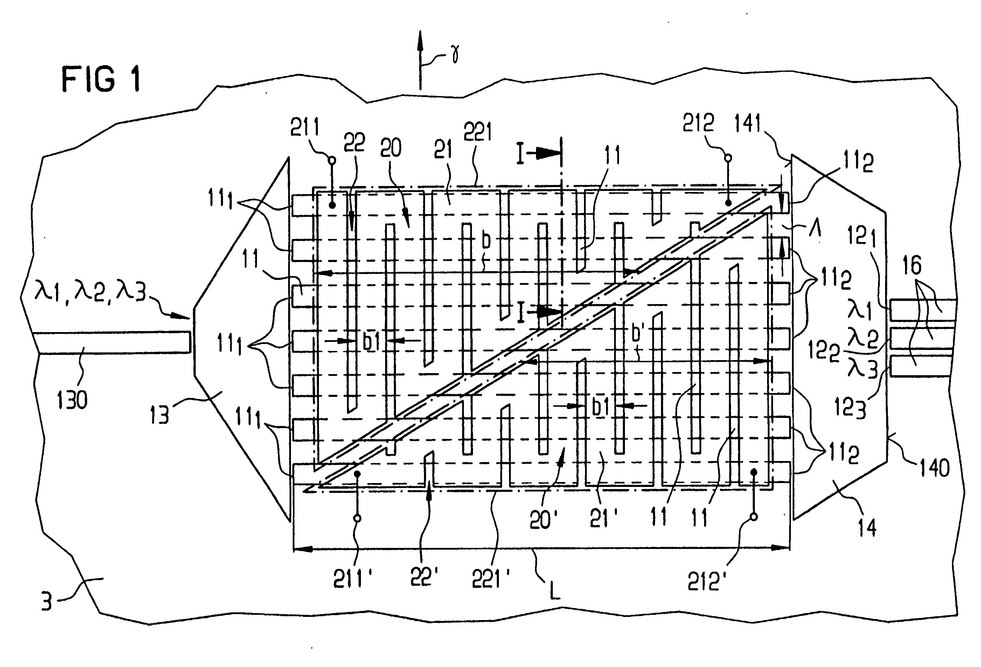

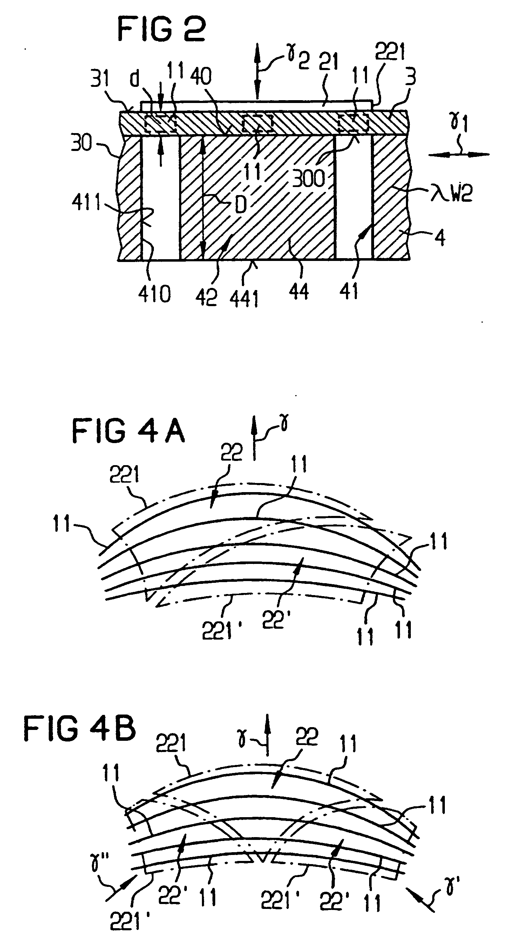

Die in den Figuren 1 und 2 dargestellte Anordnung besteht aus
- mehreren optischen Wellenleitern 11, deren jeder ein eingangsseitiges Ende 11₁ zum Einkoppeln einer optischen Welle in diesen Wellenleiter 11, je ein ausgangsseitiges Ende 11₂ zum Auskoppeln einer in diesem Wellenleiter 11 geführten optischen Welle und zwischen den beiden Enden 11₁ und 11₂ eine bestimmte optische Länge nL aufweist,
- einer Einrichtung 20 zur Erzeugung einer Änderung Δ(nL) der optischen Länge nL der Wellenleiter 11 derart, daß die erzeugte Änderung Δ(nL) der optischen Länge nL in einer Richtung r von Wellenleiter 11 zu Wellenleiter 11 zunimmt, und
- einer Einrichtung 20' zur Erzeugung einer Änderung Δ(nL) der optischen Länge nL der Wellenleiter 11 derart, daß die erzeugte Änderung Δ(nL) der optischen Länge nL in der einen Richtung r von Wellenleiter 11 zu Wellenleiter 11 abnimmt.

Eine dieses Anordnung sehr ähnliches optisches Element ist aus der europäischen Patentanmeldung EP 756 184 bekannt.

Die optische Länge nL jedes Wellenleiters 11 ist gegeben durch das Produkt aus dessen effektiver Brechzahl n und dessen geometrischer Länge L.

Die Wellenleiter 11 sind beispielsweise so gewählt, daß sie untereinander die gleiche effektive Brechzahl n aufweisen.

Die geometrische Länge L der Wellenleiter 11 ist in der Figur 1 für alle Wellenleiter 11 gleich groß dargestellt, jedoch ist dies der seltenere Fall, denn meist sind die Wellenleiter 11 so bemessen, daß ihre optische Länge nL trotz gleicher Brechzahl n von Wellenleiter 11 zu Wellenleiter 11 verschieden ist und damit auch ihre geometrische Länge L.

Beim Beispiel nach den Figuren 1 und 2 sei wie bei der speziellen Ausführung der bekannten Anordnung angenommen, daß, obgleich nicht dargestellt, die geometrische Länge L der Wellenleiter 11 in der Richtung r von Wellenleiter 11 zu Wellenleiter 11 zunimmt, so daß 11 in Figur 1 der unterste Wellenleiter die kleinste geometrische und damit optische Länge L bzw. nL und der oberste Wellenleiter 11 die größte geometrische und damit optische Länge L bzw. nL aufweist.

Auch sei wie bei der speziellen Ausführung der bekannten Anordnung angenommen, daß die optische Länge nL der Wellenleiter 11 in der Richtung r von Wellenleiter 11 zu Wellenleiter 11 zu Wellenleiter 11 um den gleichen Betrag zunimmt.

Überdies sei wie bei der speziellen Ausführung der bekannten Anordnung angenommen daß die ausgangsseitigen Enden 11₂ der Wellenleiter 11 in einem derart geringen räumlichen Abstand Λ nebeneinander angeordnet sind, daß die aus diesen Enden 11₂ ausgekoppelten optischen Wellen kohärent einander überlagert sind.

Die bisher beschriebene Anordnung bildet ein optisches Phased-Array, zum räumlichen Trennen voneinander verschiedener optischer Wellenlängen λ₁, λ₂, λ₃ die in einer optischen Welle enthalten sind. Diese optische Welle wird bekanntermaßen in alle Wellenleiter 11 des Phased-Array durch das eingangsseitige Ende 11₁ dieser Wellenleiter 11 eingekoppelt. In jedem dieser Wellenleiter 11 wird je ein alle diese Wellenlängen λ₁, λ₂, λ₃ enthaltender optischer Leistungsanteil dieser Welle zum ausgangsseitigen Ende 11₂ dieses Wellenleiters 11 geführt und an diesem Ende 11₂ ausgekoppelt. Die aus allen ausgangsseitigen Enden 11₂ ausgekoppelten Leistungsanteile werden kohärent einander überlagert.

Die voneinander verschiedene optische Länge nL der Wellenleiter 11 und die kohärente Überlagerung der ausgekoppelten Leistungsanteile bewirken, daß die auf eine einzelne Wellenlänge λ₁, λ₂ oder λ₃ entfallenden ausgekoppelten optischen Leistungsanteile in einem dieser Wellenlänge λ₁, λ₂ bzw. λ₃ individuell zugeordneten Raumpunkt 12₁, 12₂ bzw. 12₃ konzentriert werden, wobei die auf voneinander verschiedene Wellenlängen λ₁, λ₂ oder λ₃ entfallenden ausgekoppelten optischen Leistungsanteile in räumlich voneinander beabstandeten Raumpunkten 12₁, 12₂ bzw. 12₃ konzentriert werden.

Die optische Welle, welche die verschiedenen Wellenlängen λ₁, λ₂ bzw. λ₃ enthält, wird dem eingangsseitigen Ende 11₁ jedes Wellenleiters 11 des Phased-Array durch einen als "Fan-In" bekannten Schichtwellenleiter 13 aus einem Zuführungswellenleiter 130 zugeführt. Die räumlich beabstandeten Raumpunkte 12₁, 12₂, 12₃ befinden sich auf einer von den ausgangsseitigen Enden 11₂ der Wellenleiter 11 abgekehrten Stirnfläche 140 eines als "Fan-Out" bekannten Schichtwellenleiters 14 mit einer den den ausgangsseitigen Enden 11₂ gegenüberliegenden Stirnfläche 141. An die Stirnfläche 140 ist in jedem Raumpunkt 12₁, 12₂, 12₃ je ein fortführender Wellenleiter 16 angekoppelt.

Die Zahl der Wellenleiter 11 ist nicht wie in der Figur 1 auf sieben beschränkt, sondern kann kleiner sein, ist vorzugsweise aber viel größer. Ebenso ist die Zahl der verschiedenen zu trennenden Wellenlängen λ nichtauf drei beschränkt, sondern kann kleiner oder größer, beispielsweise sechzehn sein.

Wie bei der speziellen Ausführung der bekannten Anordnung weist jeder Wellenleiter 11 thermooptisches Material auf.

Anders als bei der bekannten Anordnung weist bei der Anordnung nach Figur 1 die Einrichtung 20 zur Erzeugung der in der einen Richtung r zunehmenden Änderung Δ(nL) der Länge nL der Wellenleiter 11 beispielsweise eine einzige Elektrode 21 zum Erwärmen des thermooptischen Materials auf, die einen in der einen Richtung r von Wellenleiter 11 zu Wellenleiter 11 zunehmenden Teil der optischen Länge nL jedes Wellenleiters 11 erwärmt.

Die Elektrode 21 ist auf einen die Wellenleiter 11 flächig teilweise überdeckenden Bereich 22 beschränkt, der eine in der einen Richtung r zunehmende Breite b aufweist und den die Elektrode 21 im wesentlichen bedeckt, vorzugsweise gleichmäßig. Der Bereich 22 ist durch die geschlossene strichpunktierte Linie 221 umrandet.

Die neuartige Einrichtung 20' zur Erzeugung der in der einen Richtung r abnehmenden Änderung Δ(nL) der optischen Länge nL der Wellenleiter 11 eine einzige Elektrode 21' zum Erwärmen des thermooptischen Materials aufweist, die einen in der einen Richtung r von Wellenleiter 11 zu Wellenleiter 11 abnehmenden Teil der optischen Länge nL jedes Wellenleiters 11 erwärmt.

Die Elektrode 21' ist auf einen die Wellenleiter 11 flächig teilweise überdeckenden Bereich 22' beschränkt ist, der eine in der einen Richtung r abnehmende Breite b' aufweist und den diese Elektrode 21' im wesentlichen bedeckt, vorzugsweise gleichmäßig. Der Bereich 22' ist durch die geschlossene strichpunktierte Linie 221' umrandet.

Die Elektrode 21 deckt flächigen Bereich 22 vorzugsweise mäanderförmig ab, ebenso die Elektrode 21' einen flächigen Bereich 22'. Die Elektrode 21 veläuft mäanderförmig zwischen einem elektrischen Anschluß 211 und einem elektrischen Anschluß 212 und die Elektrode 21' verläuft mäanderförmig zwischen zwischen einem elektrischen Anschluß 211' und einem elektrischen Anschluß 212'. Zwischen die Anschlüsse 211 und 212 ist eine elektrische Heizspannung und zwischen die Anschlüsse 211' und 212' eine elektrische Heizspannung anzulegen.

Die Breite b1 der Elektroden 21 und 21' ist in der Figur 1 übertrieben groß dargestellt. Sie wird vorzugsweise so klein wie möglich gewählt und der Abstand zwischen parallel nebeneinanderverlaufenden Abschnitten der Elektroden wird vorzugsweise kleiner und nicht größer als die Breite b1 gewählt.

Die dargestellten geschlossenen strichpunktierten Linien 221 und 221' beschreiben jeweils ein Dreieck mit geraden Seiten. Dies liegt darin, daß die Wellenleiter 11 parallel geradlinig und gleich lang zwischen den Enden 11₁ und 11₂ verlaufend dargestellt sind. Nicht zuletzt wegen der unterschiedlichen geometrischen Länge L verlaufen diese Wellenleiter 11 in Wirklichkeit wie bei der speziellen Ausführung der bekannten Anordnung gekrümmt und mit unterschiedlicher Krümmung. Dies bedingt, daß die geschlossenen strichpunktierten Linien 221 und 221' in Wirklichkeit jeweils ein Dreieck mit krummlinigen Seiten beschreiben.

Nach Figur 2 sind die Wellenleiter 11 des Beispiels nach Figur 1 in einer optischen Schicht 3 ausgebildet, die auf einem Oberflächenabschnitt 40 eines Substrats 4 angeordnet ist.

Besonders vorteilhaft ist es im Hinblick auf eine Reduzierung der Heizleistung, wenn die Schicht 3 aus einem Material bestimmter Wärmeleitfähigkeit λ_{w1} und das Substrat 4 aus einem Material einer im Vergleich zum Material der optischen Schicht 3 größeren Wärmeleitfähigkeit λ_{w2} besteht und wenn im Substrat 4 eine an die Schicht 3 grenzende und derart ausgebildete isolierende Einrichtung 41 vorhanden ist, daß ein unter einer Elektrode 21 und/oder 21' befindlicher Bereich 42 im Substrat 4 vom übrigen Substrat 4 thermisch isoliert ist.

Die isolierende Einrichtung 41 ist beispielsweise eine im Substrat 4 ausgebildete Aussparung 410, die sich senkrecht in Richtung r2 zum Oberflächenabschnitt 40 des Substrats 4 durch das ganze Substrat 4 hindurch erstreckt, an die Schicht 3 angrenzt und eine den thermisch isolierten Bereich 42 im Substrat 4 geschlossen ringförmig umgebende Begrenzungsfläche 411 aufweist, die sich ebenfalls senkrecht in Richtung r2 zum Oberflächenabschnitt 40 des Substrats 4 durch das ganze Substrat 4 hindurch bis zur Schicht 3 erstreckt und an die das Substrat 4 in Richtung r1 parallel zum Oberflächenabschnitt 40 von außen her angrenzt.

Die Begrenzungsfläche 411 der Aussparung 410 sollte vorteilhafterweise auf der dem Oberflächenabschnitt 40 des Substrats 4 zugekehrten Oberfläche 30 grenzenden Schicht 3 einen Bereich 300 umgrenzen, der mit der zum Oberflächenabschnitt 40 des Substrats 4 senkrechten Projektion des von der strichpunktierten Linie 221 umgrenzten und von einer Elektrode 21 und/oder 21' abgedeckten Bereichs 22 bzw. 22' auf der vom Oberflächenabschnitt 40 abgekehrten und die Elektrode 21 bzw. 21' tragenden Oberfläche 31 der Schicht 3 auf die dem Oberflächenabschnitt 40 zugekehrte Oberfläche 30 der Schicht 3 zusammenfällt und sich mit dieser Projektion deckt. D.h. die Begrenzungsfläche 411 der Aussparung 410 sollte auf der Oberflächer 30 der Schicht 3 eine Linie beschreiben, die mit der zum Oberflächenabschnitt 40 senkrechten Projektion der Linie 221 und/oder Linie 221' zusammenfällt. Diese Maßnahme ist im Hinblick auf gute optische Eigenschaften der erfindungsgemäßen Anordnung, insbesondere in der Ausbildung als Phased-Array vorteilhaft.

Die Aussparung 410 kann mit Luft oder einem anderen gasförmigen, flüssigen oder festen thermisch isolierenden Material geringer Wärmeleitfähigkeit gefüllt sein.

Beim Beispiel nach den Figuren 1 und 2 besteht Aussparung 410 aus einem sich vertikal in Richtung r2 zum Oberflächenabschnitt 40 durch das ganze Substrat 4 bis zur Schicht 3 erstreckenden Graben, der einen ganz im thermisch isolierten Bereich 42 liegenden stehengebliebenen Teil 44 des Substrats 4 in Richtung r1 parallel zum Oberflächenabschnitt 40 des Substrats 4 geschlossen ringförmig umgibt und dadurch diesen Teil 44 vom übrigen Substrat 4 thermisch isoliert. Beim Betrieb der Anordnung ist eine vom Oberflächenabschnitt 40 des Substrats 4 abgekehrte Oberfläche 441 des stehengebliebenen Teils 44 thermisch gegen die Umgebung thermisch zu isolieren, beispielsweise mittels Luft oder eines anderen thermisch isolierenden Materials geringer Wärmeleitfähigkeit.

Bei einem konkreten Ausführungsbeispiel besteht optische Schicht 3 aus Quarzglas und das Substrat 4 aus Silizium, das eine um etwa den Faktor 100 größere Wärmeleitfähigkeit als das Glas aufweist. Dieses Substrat 4 weist eine Dicke D von etwa 500 µm auf und ist erheblich größer als die beispielsweise weniger als 100 µm betragende Dicke d der Schicht 3. Die grabenförmige Aussparung 410 kann in diesem Substrat mit Hilfe eines Ultraschall-Schleifverfahrens und nachfolgendem Naßätzen mit KOH erzeugt werden.

Der stehengebliebene Teil 44 des Substrats 4 ist nicht erforderlich, vielmehr wäre es im Hinblick auf eine Reduzierung der Heizleistung günstiger, wenn er fehlte und die Aussparung 410 vollständig mit thermisch isolierendem Material, beispielsweise Luft ausgefüllt wäre. Die Herstellung einer grabenförmigen Aussparung 410, die einen stehengebliebenen zentralen Teil 44 des Substrats 4 ringförmig umgibt, ist zumindest bei Silizium relativ einfacher.

Bei diesem konkreten Ausführungsbeispiel konnte vorteilhafterweise trotz des Vorhandenseins des Teils 44 im thermisch isolierten Bereich 42 eine Reduzierung der Heizleistung um 99% gegenüber einem gleich aufgebauten Beispiel ohne Aussparung 410 und thermisch isoliertem Bereich 42 im Substrat 4 erzielt werden.

Das Ausführungsbeispiel nach Figur 3 unterscheidet sich vom Beispiel nach den Figuren 1 und 2 im wesentlichen nur durch die andere Einteilung der Bereiche 22 und 22'. Während beispielsweise der Bereich 22 weiterhin aus einem einzigen Dreick besteht, ist der Bereich 22' aus zwei kleineren Dreiecken zusammengesetzt, deren jedes durch je eine geschlossene Linie 221' umrandet ist und je eine Elektrode 21' enthält.

Im Unterschied zum Beispiel nach Figur 1, bei dem parallel nebeneinander verlaufende Abschnitte der Elektrode 21 und parallel nebeneinanderverlaufende Abschnitte der Elektrode 21' in der Richtung r ausgerichtet sind, verlaufen beim Beispiel nach Figur 3 parallel nebeneinander verlaufende Abschnitte jeder Elektrode 21' jeweils in einer Richtung r' oder r'' schräg in einem Winkel zu parallel nebeneinanderverlaufenden und in der Richtung r ausgerichteten Abschnitten der Elektrode 21.

In der Figur 3 sind die Einrichtungen 130, 13, 14 und 16 zum Ein- und Auskoppeln optischer Wellen fortgelassen. Ansonsten bezeichnen in den Figuren 1 und 2 gleiche Bezugszeichen gleiche Teile.

Auch beim Beispiel nach Figur 3 können die Wellenleiter 11 wie bei der speziellen Ausführung der bekannten Anordnung gekrümmt und mit unterschiedlicher Krümmung verlaufen, so daß die geschlossenen strichpunktierten Linien 221 und 221' jeweils ein Dreieck mit krummlinigen und nicht mit geradlinigen Seiten beschreiben. Überdies kann dieses Beispiel den Schichtaufbau nach Figur 2 und einen thermisch isolierten Bereich wie dort im Substrat 4 aufweisen.

In der Figur 4a sind für den Fall des Beispiels nach den Figuren 1 und 2 und in der Figur 4b für den Fall des Beispiels nach Figur 3 jeweils Bereiche 22 und 22' bei gekrümmt verlaufenden Wellenleitern 11 eines Phased-Array qualitativ gezeigt, die aufgrund dieses gekrümmten Verlaufes durch gekrümmte Linien 221 bzw. 221' umrandet sind.

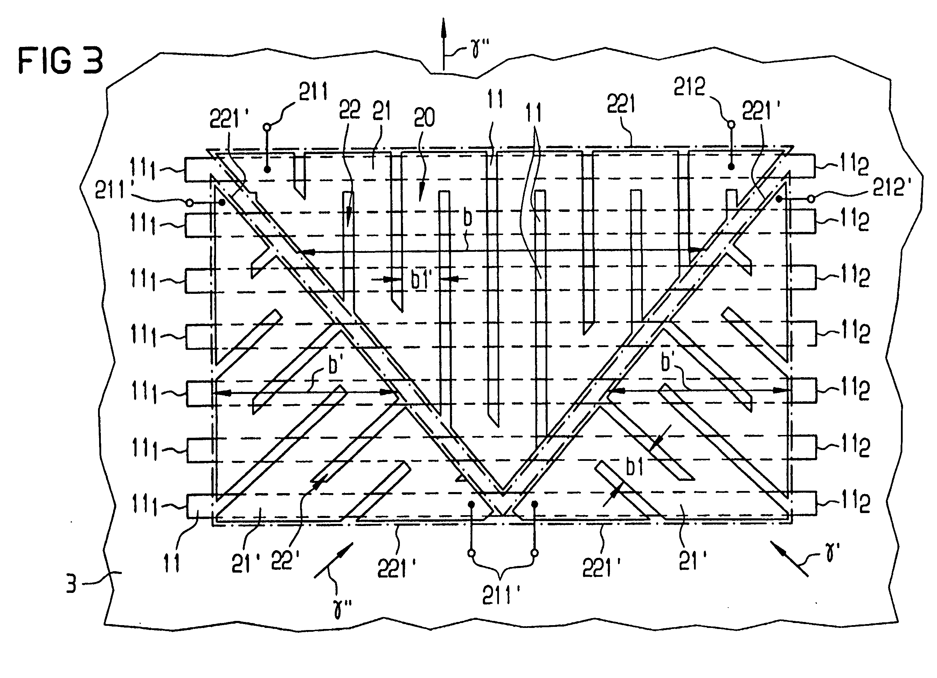

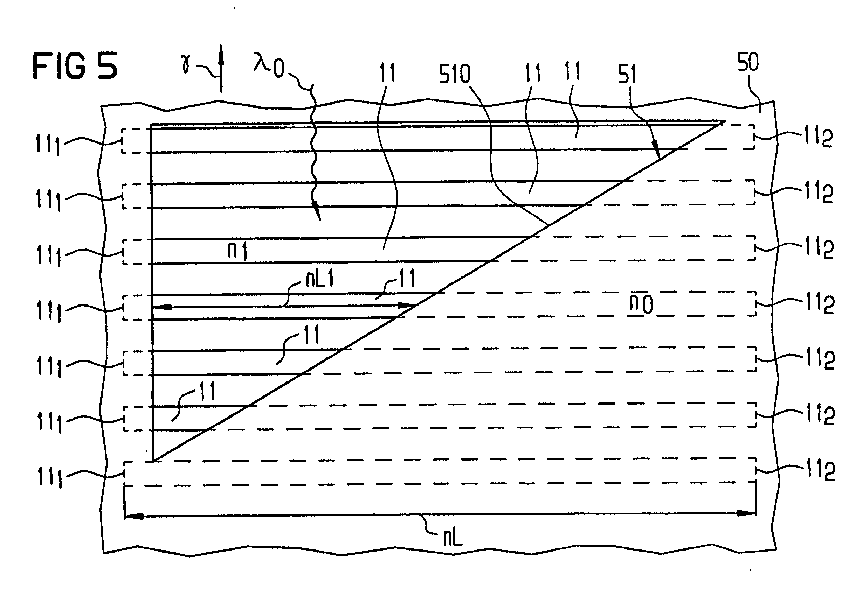

In der Figur 5 ist beispielhaft eine erfindungsgemäße optische Anordnung in Draufsicht dargestellt, die aus mehreren optischen Wellenleitern 11 besteht, deren jeder ein eingangsseitiges Ende 11₁ zum Einkoppeln einer optischen Welle in diesen Wellenleiter 11, je ein ausgangsseitiges Ende 11₂ zum Auskoppeln einer in diesem Wellenleiter 11 geführten optischen Welle und zwischen den beiden Enden 11₁, 11₂ eine bestimmte optische Länge nL aufweist, und die ein Phased-Array wie bei den Beispielen nach den Figuren 1 bis 4 sein kann.

Bei dieser Anordnung weist jeder Wellenleiter 11 ein Material einer Brechzahl n₀ auf, die durch Bestrahlen des Materials mit Licht einer bestimmten optischen Wellenlänge λ₀ zu verändern ist. Die Brechzahl n₀ ist nicht mit der effektiven Brechzahl n des Wellenleiters 11 zu verwechseln, sie ist beispielsweise die Brechzahl des Materials eines lichtführenden Kerns des Wellenleiters 11 und bestimmt die effektive Brechzahl des Wellenleiters 11.

Die Einrichtung zur Erzeugung der in der einen Richtung r zunehmenden Änderung Δ(nL) der optischen Länge nL der Wellenleiter 11 weist bei dieser Anordnung eine die Wellenleiter 11 bedeckende Belichtungsmaske 50 auf, die für die bestimmte Wellenlänge λ₀ undurchlässig ist und in der eine Öffnung 51 ausgebildet ist, die einen in der einen Richtung r von Wellenleiter 11 zu Wellenleiter 11 zunehmenden Teil nL1 der optischen Länge nL jedes Wellenleiters 11 zur Belichtung mit dem Licht der bestimmten Wellenlänge λ₀ freiläßt.

Die in der einen Richtung r zunehmende Änderung Δ(nL) der optischen Länge nL der Wellenleiter 11 wird durch zeitweiliges Belichten der in der Öffnung 51 freiliegenden Wellenleiter 11 mit der bestimmten Wellenlänge λ₀ erzeugt und ist nach dieser Belichtung bleibend, wenn keine nachfolgende Belichtung mit dieser Wellenlänge λ₀ erfolgt.

Diese bleibende Änderung Δ(nL) der optischen Länge nL der Wellenleiter 11 besteht darin, daß in einem durch die Öffnung 51 der Maske 50 festgelegten Teil nL1 der optischen Länge nL jedes Wellenleiters 11 eine durch das Bestrahlen mit dem Licht der bestimmten optischen Wellenlänge λ₀ gegenüber der unveränderten Brechzahl n₀ dieses Wellenleiters 11 in einer Richtung, beispielsweise in Richtung Vergrößerung bleibend veränderte Brechzahl n₁ vorhanden ist. Dieser Teil nL1 beispielsweise vergrößerter Brechzahl n₁ der optischen Länge nL nimmt in der einen Richtung r von Wellenleiter 11 zu Wellenleiter 11 zu.

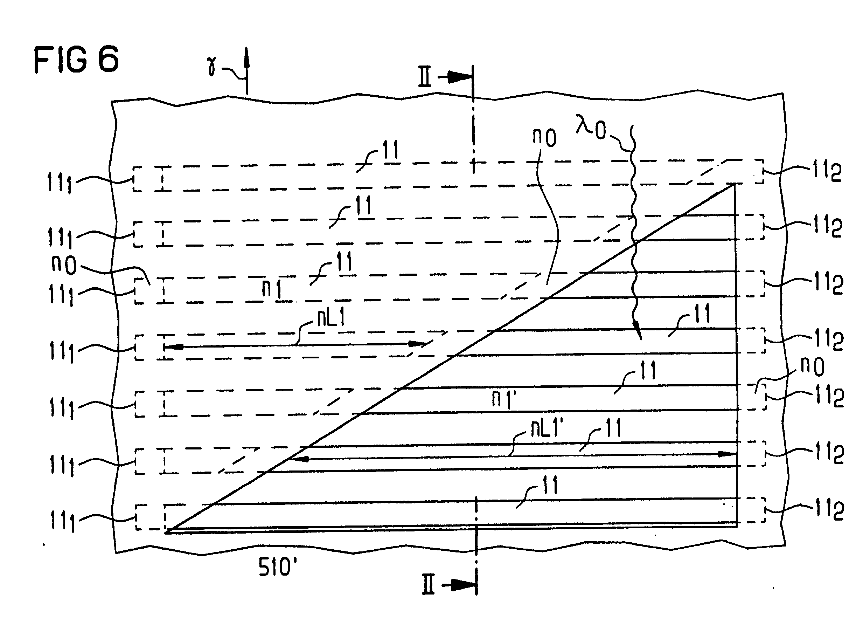

Die Einrichtung zur Erzeugung der in der einen Richtung r abnehmenden Änderung Δ(nL) der optischen Länge nL der Wellenleiter 11 weist eine in der die Anordnung nach Figur 5 in der gleichen Darstellungsart zeigenden Figur 6 dargestellte Belichtungsmaske 50' auf, welche die Wellenleiter 11 bedeckt und für die bestimmte Wellenlänge λ₀ undurchlässig ist, und in der eine Öffnung 51' ausgebildet ist, die einen in der einen Richtung r von Wellenleiter 11 zu Wellenleiter 11 abnehmenden Teil nL1' der optischen Länge nL jedes Wellenleiters 11 zur Belichtung mit dem Licht der bestimmten Wellenlänge λ₀ freiläßt.

Diese in der einen Richtung r abnehmende Änderung Δ(nL) der optischen Länge nL der Wellenleiter 11 wird durch zeitweiliges Belichten der in der Öffnung 51' freiliegenden Wellenleiter 11 mit der bestimmten Wellenlänge λ₀ erzeugt und ist nach dieser Belichtung bleibend, wenn keine nachfolgende Belichtung mit dieser Wellenlänge λ₀ erfolgt.

Diese bleibende Änderung Δ(nL) der optischen Länge nL der Wellenleiter 11 besteht darin, daß in einem durch die Öffnung 51' der Maske 50' festgelegten Teil nL1' der optischen Länge nL jedes Wellenleiters 11 eine durch das Bestrahlen mit dem Licht der bestimmten optischen Wellenlänge λ₀ gegenüber der unveränderten Brechzahl n₀ dieses Wellenleiters 11 in einer Richtung, beispielsweise in Richtung Vergrößerung bleibend veränderte Brechzahl n₁' vorhanden ist. Dieser Teil nL1' beispielsweise vergrößerter Brechzahl n₁' der optischen Länge nL nimmt in der einen Richtung r von Wellenleiter 11 zu Wellenleiter 11 ab.

Die Belichtung unter Verwendung der Maske 50 und die Belichtung unter Verwendung der Maske 50' werden zeitlich nacheinander ausgeführt, wobei die Reihenfolge unerheblich ist.

Dabei kann beispielsweise so vorgegangen werden, daß bei der zuerst vorgenommenen Belichtung mit einer Maske 50 oder 50' eine Änderung Δ(nL) der optischen Länge nL der Wellenleiter 11 erzeugt und durch eine nachfolgende zeitlich und/oder intensitätsmäßig abgestimmte Belichtung mit der anderen Maske 50' bzw. 50 diese Änderung Δ(nL) auf einen gewünschten Wert getrimmt wird. Mit dieser Methode kann beispielsweise ein Phased-Array auf einen bestimmten Wellenlängenkanal getrimmt werden, in dem zumindest während der zweiten Belichtung mit der andern Maske ein Ausgangssignal des Phased-Array beobachtet und diese Belichtung abgebrochen wird, sobald ein gewünschtes Ausgangssignal erhalten wird.

Vorzugsweise wird eine auf ein Belichtung mit der bestimmten Wellenlänge λ₀ folgende Belichtung mit dieser Wellenlänge λ₀ in einem Bereich der Wellenleiter 11 vorgenommen, der bei der ersten Belichtung nicht belichtet worden ist.

Bei dem in den Figuren 5 und 6 dargestellten Beispiel fällt der die Öffnung 51 umgebende Rand der Maske 50 mit der strichpunktierten Linie 221 in Figur 1 und der die Öffnung 51' umgebende Rand der Maske 50' mit der strichpunktierten Linie 221' in Figur 1 zusammen. Die Öffnungen 51 und 51' können beispielsweise auch so ausgebildet sein, daß der diese Öffnungen umgebende Rand der betreffenden Maske 50 bzw. 50' mit der strichpunktierten Linie 221 bzw. 221' in Figur 3 oder Figur 4a oder Figur 4b zusammenfällt.

Der bei einer Belichtung mit einer Maske 50 oder 50' erzeugte Teil nL1 bzw. nL1' geänderter Brechzahl n₁ bzw. n₁' der optischen Länge nL eines Wellenleiters 11 muß nicht zusammenhängend sein. Ein aus mehreren Bereichen bestehender derartiger Teil nL1 bzw. nL1' kann beispielsweise durch Verwendung einer Maske 50 bzw. 50' erhalten werden, wenn diese Maske 50 bzw. 50' zwei oder mehrere voneinande getrennte Öffnungen 51 bzw. 51' aufweist.

Nach Abschluß aller Belichtungen mit der bestimmten Wellenlänge λ₀ ist eine optische Anordnung entstanden, die aus mehreren optischen Wellenleitern 11 besteht, deren jeder ein eingangsseitiges Ende 11₁ zum Einkoppeln einer optischen Welle in diesen Wellenleiter 11, je ein ausgangsseitiges Ende 11₂ zum Auskoppeln einer in diesem Wellenleiter 11 geführten optischen Welle und zwischen den beiden Enden 11₁, 11₂ eine bestimmte optische Länge nL aufweist, und bei der zumindest ein Wellenleiter 11 eine durch Bestrahlen dieses Wellenleiters 11 mit Licht der bestimmten optischen Wellenlänge λ₀ veränderte photoempfindliche Brechzahl n₁ vorhanden ist.

Bei dem in den Figuren 5 und 6 dargestellten beispielhaften optischen Anordnung ist nach Abschluß beider Belichtungen in einem Teil nL1 der optischen Länge nL jedes Wellenleiters 11 eine durch Bestrahlen mit Licht einer bestimmten optischen Wellenlänge λ₀ gegenüber einer unveränderten Brechzahl n₀ dieses Wellenleiters 11 in einer Richtung veränderte, beispielsweise vergrößerte Brechzahl n₁ vorhanden, wobei dieser Teil nL1 jedes Wellenleiters 11 in der Richtung r von Wellenleiter 11 zu Wellenleiter 11 zunimmt, und in einem von diesem einen Teil nL1 verschiedsenen anderen Teil nL1' der optischen Länge nL jedes Wellenleiters 11 eine durch Bestrahlen mit Licht einer bestimmten optischen Wellenlänge λ₀ gegenüber der unveränderten Brechzahl n₀ dieses Wellenleiters 11 in der einen Richtung veränderte, beispielsweise vergrößerte Brechzahl n₁' vorhanden ist, wobei dieser andere Teil nL1' jedes Wellenleiters 11 in der einen Richtung r von Wellenleiter 11 zu Wellenleiter 11 abnimmt.

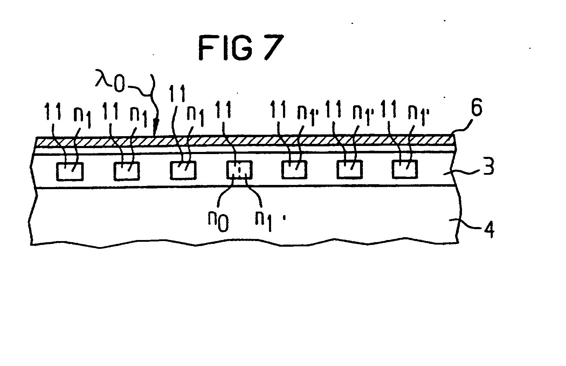

Damit sich die unveränderte und veränderte Brechzahl n₀, n₁, n₁' nach Abschluß sämtlicher Belichtungen mit einer bestimmten Wellenlänge λ₀ nicht mehr verändern, ist vorzugeweise eine Abschirmeinrichtung zum Abschirmen jedes Wellenleiters 11 unveränderter und veränderter Brechzahl n₀, n₁, n₁' gegen eine Bestrahlung mit Licht vorhanden ist, das die unveränderte und veränderte Brechzahl n₀, n₁, n₁' dieses Wellenleiters 11 verändert. Eine solch Abschirmung ist in der Figur 7 angedeutet, die einen vertikalen Schnitt durch die optische Anordnung nach Figur 6 ohne die Maske 50' längs der Linie II-II darstellt und mit 6 bezeichnet. Die Abschirmung 6 kann beispielsweise ein Gehäuse sein, in das die optische Anordnung eingebaut ist.

## Patentansprüche

1. Optische Anordnung, bestehend aus zumindest zwei optischen Wellenleitern (11), deren jeder ein eingangsseitiges Ende (11₁) zum Einkoppeln einer optischen Welle in diesen Wellenleiter (11), je ein ausgangsseitiges Ende (11₂) zum Auskoppeln einer in diesem Wellenleiter (11) geführten optischen Welle und zwischen den beiden Enden (11₁, 11₂) eine bestimmte optische Länge (nL) aufweist, **dadurch gekennzeichnet ,**
**daß** jeder Wellenleites (11) ein Material einer Brechzahl (n₀) aufweist, die durch Bestrahlen des Materials mit Licht einer bestimmten Optischen Wellenlänge zu verändern ist,
**daß** zumindest einer der Wellenleiter (11) eine durch zumindest teilweises Bestrahlen dieses Wellenleiters (11) mit Licht dieser bestimmten optischen Wellenlänge (λo) gegenüber dem mindestens einen anderen Wellenleiter (11) veränderte optische Länge (nL) aufweist,
**daß** in einem Teil (nL1) jedes Wellenleiters (11) eine durch Bestrahlen mit Licht dieser bestimmten optischen Wellenlänge (λo) gegenüber der unveränderten Brechzahl (n₀) dieses Wellenleiters (11) in einer Richtung veränderte Brechzahl (n₁) vorhanden ist und
**daß** die Länge des Teils (nL1) jedes Wellenleiters (11), das eine veränderte Brechzahl (n₁) aufweist, in einer Richtung (r) von Wellenleiter (11) zu Wellenleiter (11) zunimmt.

2. Anordnung nach Anspruch 1, bei dem
- in einem von dem einen Teil (nL1) verschiedenen anderen Teil (nL1') der optischen Länge (nL) jedes Weilenleiters (11) eine durch Bestrahlen mit Licht der bestimmten optischen Wellenlänge (λo) gegenüber der unveränderten Brechzahl (n₀) dieses Wellenleiters (11)in der einen Richtung veränderte Brechzahl (n₁') vorhanden ist, und
- der andere Teil (nL1') veränderter Brechzahl (n1') der optischen Länge (nL) jedes Wellenleiters (11) in der einen Richtung (r) von Wellenleiter (11) zu Wellenleiter (11) abnimmt.

3. Anordnung nach einem der vorstehenden Ansprüche, bei der eine Abschirmeinrichtung (6) zum Abschirmen jedes Wellenleiters (11) unveränderter und veränderter Brechzahl (n₀, n₁, n₁') gegen eine Bestrahlung mit Licht, das die unveränderte und veränderte Brechzahl (n₀, n₁, n₁') dieses Wellenleiters (11) verändert, vorhanden ist.

## Claims

1. Optical arrangement comprising at least two optical waveguides (11) each of which has an input end (11₁) for injection of an optical wave into this waveguide (11), in each case one output end (11₂) for outputting an optical wave which has been carried in this waveguide (11), and has a specific optical length (nL) between the two ends (11₁, 11₂) **characterized in that** each waveguide (11) has a material with a refractive index (n₀) which can be changed by illuminating the material with light at a specific optical wavelength, **in that** at least one of the waveguides (11) has an optical length (nL) which is varied with respect to the at least one other waveguide (11) by illuminating this waveguide (11) at least in places with light at this specific optical wavelength (λo), **in that** a refractive index (n₁) which has been changed in one direction with respect to the unchanged refractive index (n₀) of this waveguide (11) by illumination with light at this specific optical wavelength (λo) is produced in a part (nL1) of each waveguide (11), and **in that** the length of the part (nL1) of each waveguide (11) which has a changed refractive index n₁ increases in one direction (r) from waveguide (11) to waveguide (11).

2. Arrangement according to Claim 1, in which,
- in another part (nL1'), which is not the same as a part (nL1), of the optical length (nL) of each waveguide (11), a refractive index (n₁') is provided which has been changed in one direction with respect to the unchanged refractive index (n₀) of this waveguide (11) by illumination with light at the specific optical wavelength (λo), and,
- the other part (nL1') of the changed refractive index (n1') of the optical length (nL) of each waveguide (11) decreases in one direction (r) from waveguide (11) to waveguide (11).

3. Arrangement according to one of the preceding claims, in which
a screening device (6) is provided for screening each waveguide (11) of unchanged and changed refractive index (n₀, n₁, n₁') with respect to illumination with light which changes the unchanged and changed refractive index (n₀, n₁, n₁') of this waveguide (11).

## Revendications

1. Dispositif optique constitué d'au moins deux guides d'onde (11) optiques, dont chacun a une extrémité (11₁) côté entrée pour l'injection d'une onde optique dans ce guide d'onde (11), une extrémité (11₂) côté sortie pour la sortie d'une onde optique guidée dans ce guide d'onde (11), et entre les deux extrémités (11₁, 11₂), une longueur (nL) optique déterminée,
**caractérisée en ce que**
chaque guide d'onde (11) a un matériau d'un indice (nₒ) de réfraction, qui peut être modifié par exposition du matériau à de la lumière d'une longueur d'onde optique déterminée,
**en ce qu'**au moins l'un des guides d'onde (11) a une longueur (nL) optique modifiée par exposition au moins partielle de ce guide d'onde (11) à de la lumière de cette longueur d'onde (λₒ) optique déterminée par rapport à l'au moins un autre guide d'onde (11),
**en ce que** dans une partie (nL1) de chaque guide d'onde (11), il y a un indice de réfraction (n1) modifié dans une direction, par exposition à de la lumière de cette longueur d'onde (λₒ) optique déterminée par rapport à l'indice de réfraction (nₒ) non modifié de ce guide d'onde (11), et
**en ce que** la longueur de la partie (nL1) de chaque guide d'onde (11), qui a un indice de réfraction (n₁) modifié, augmente dans une direction (r) allant d'un guide d'onde (11) à l'autre (11).

2. Dispositif suivant la revendication 1, dans lequel
- dans une autre partie (nL1'), différente d'une partie (nL1), de la longueur (nL) optique de chaque guide d'onde (11), il y a un indice de réfraction (n1') modifié dans une direction par exposition à de la lumière de la longueur d'onde (λₒ) optique déterminée par rapport à l'indice de réfraction (nₒ) non modifié de ce guide d'onde (11), et
- l'autre partie (nL1'), d'indice de réfraction (n₁') modifié, de la longueur (nL) optique de chaque guide d'onde (11) diminue dans la direction (r) d'un guide d'onde (11) à l'autre (11).

3. Dispositif suivant l'une des revendications précédentes, dans lequel il y a un dispositif (6) d'écran pour protéger chaque guide d'onde (11), d'indice de réfraction (nₒ, n₁, n₁') non modifié et modifié d'une exposition de la lumière, qui modifie l'indice de réfraction (nₒ, n₁, n₁') non modifié et modifié de ce guide d'onde (11).
